Europäisches Patentamt

European Patent Office

Office européen des brevets

(11) Publication number: **0 176 216**
**A2**

(12) # EUROPEAN PATENT APPLICATION

(21) Application number: **85305840.2**

(22) Date of filing: **16.08.85**

(51) Int. Cl.⁴: **G 01 N 1/06**

(30) Priority: **26.09.84 DE 3435290**

(43) Date of publication of application:
**02.04.86 Bulletin 86/14**

(84) Designated Contracting States:
**FR GB SE**

(71) Applicant: **PARKE, DAVIS & COMPANY**
**201 Tabor Road**
**Morris Plains New Jersey 07950(US)**

(72) Inventor: **Kempe, Manfred**
**Obstgartenweg 10**
**D-6906 Leimen(DE)**

(74) Representative: **Coxon, Philip et al,**
**Eric Potter & Clarkson 14 Oxford Street**
**Nottingham NG1 5BP(GB)**

(54) Improved rotary handwheel for a motor driven microtome.

(57) An improved rotary handwheel for a motor driven microtome comprises a selectively movably crank handle extending from the handwheel, and means to position the crank handle on the rotational axis of the handwheel. The crank handle is movable between a position aligned with the rotational axis of the handwheel, and a position spaced radially from the rotational axis of the handwheel. During motor driven operation of the microtome the crank handle is moved into alignment with the rotational axis of the handwheel, in order to prevent displacement of the crank handle relative to the rotational axis.

EP 0 176 216 A2

## IMPROVED ROTARY HANDWHEEL FOR A MOTOR DRIVEN MICROTOME

The invention relates to an improved rotary handwheel for a motor driven microtome.

In motor driven microtomes the drive motor is connectible to the microtome handwheel in order to move specimen clamping means relative to a cutting knife in linear oscillation at a high speed, i.e., at a large number of strokes per unit time. The specimen clamping means clamps a specimen which is cut by the cutting knife at each stroke. The drive motor is used, for example, to precut rapidly the specimen in thin sections until a precise cutting surface is obtained.

When a precise cutting surface has been obtained the specimen clamping means may be moved manually by rotating the handwheel using a crank handle provided on the handwheel.

During the motor driven movement of the specimen clamping means, the handwheel and the crank handle also rotate at a high speed which is related to the speed of operation of the motor. This produces an acute danger of injury if, for example, a person operating the microtome brings a hand into proximity of the rotating handwheel and crank handle.

It is an object of the present invention to provide an improved rotary handwheel for a motor driven microtome in which the danger of injury by the crank handle revolving with the rotating handwheel during motor driven operation can be avoided.

According to the present invention there is provided an improved rotary handwheel for a motor driven microtome comprising a selectively movable crank handle extending from said handwheel and means to position said crank handle on the rotational axis of said handwheel, whereby said crank is not displaced while the microtome is being motor driven.

0176216

-2-

Advantageously the positioning means comprises a guide for guiding movement of the crank handle between the rotational axis of the handwheel and a position spaced radially from the rotational axis.

Preferably the positioning means includes locking means for locking the crank handle at a selected position on the handwheel.

In one embodiment the positioning means is adapted to guide the movement of the crank handle along a substantially circular path. In this embodiment the positioning means preferably comprises a guide device which is arranged to be rotatable about an axis substantially parallel to and spaced from the rotational axis of the handwheel. The handle may be provided on the guide device so that the handle is aligned with the handwheel axis in one position of the guide device.

In this embodiment it is desirable that the locking means comprises a bearing sleeve provided on the guide device substantially parallel to and spaced radially relative to the rotational axis of the guide device; the crank handle may be arranged on the bearing sleeve axially slidable relative thereto in order to selectively lock and unlock the handle to the handwheel. The bearing sleeve may be welded to or screwed fixedly to the guide device.

Desirably the locking means further comprises detent means provided on the handle, and the handwheel may be provided with at least two recesses, one of said recesses being aligned with the rotational axis of the handwheel, while the other of the recesses is disposed diametrically opposite to the rotational axis of the handwheel relative to the rotational axis of the guide device. The detent means may be arranged to co-operate with the selected one of the recesses in order to lock the handle relative to the handwheel. The recesses may be constructed as slots aligned radially to the rotational axis of the guide device in order to compensate dimensional tolerances in the components of the handwheel. It is preferred that more than one recess is provided spaced from the rotational axis of the handwheel.

The detent means may comprise a central pin which is mounted axially slidable in the bearing sleeve, and which can extend through the guide device into the selected one of the recesses. A spring element may be arranged between the central pin and the bearing sleeve. The pin may further include a flange extending therefrom, and the spring element may be arranged between the flange and the bearing sleeve in order to bias the pin towards the handwheel.

The guide device may conveniently be of disc-shaped configuration, although it may be provided with any other suitable configuration. A recess may be provided in the handwheel which is shaped to correspond to the guide device. The guide device can be received in this recess so that the face of the guide device is substantially flush with the face of the handwheel.

In another embodiment the positioning means comprises a guideway which extends radially from the rotational axis of the handwheel, the crank handle being mounted slidably to the guideway.

Preferably the guideway is provided with a dovetail configuration, and the handle is provided with a sliding element adapted to slide in the guideway.

In this embodiment the locking means preferably comprises detent means provided on the sliding element. The guideway may be provided with at least two recesses, one of which is aligned with the handwheel axis, and the detent means may co-operate with a selected one of the recesses in order to lock the crank handle relative to the handwheel.

It is preferred that more than one recess is provided spaced from the rotational axis of the handwheel. The provision of more than one recess spaced from the rotational axis of the handwheel enables the mechanical torque transmitted through the crank handle to be adapted to individual conditions. Thus, for softer specimens, the radial interval of the crank handle from the rotational axis of the handwheel may be chosen to be less than for harder specimens so that the cutting speed can be higher for the softer specimens.

The sliding element may have a cross-section corresponding to the groove, in order to ensure an easy-running guidance of the crank handle in the groove, in which lateral play between the handle and the groove is eliminated.

The rotary handwheel according to the invention enables the crank handle to be moved into alignment with the rotational axis of the handwheel during motor driven movement of the specimen clamping means, so that the crank handle does not execute a circular movement during motor driven operation.

In this way the mechanical torque of the crank handle becomes zero, so that danger of injury caused by the crank handle to an operator is eliminated. The structural outlay in order to provide the rotary microtome according to the invention is very small.

Furthermore, the adjustment between the position aligned on the handwheel axis and positions out of line with the rotational axis can be effected very simply.

Figure 1 is a sectional view of one embodiment of a rotary handwheel according to the invention;

Figure 2 is an elevation of the handwheel shown in Figure 1 viewed in the direction II from Figure 1;

Figure 3 is an elevation of another embodiment of a rotary handwheel according to the invention; and

Figure 4 is a section along the lines IV-IV of Figure 3.

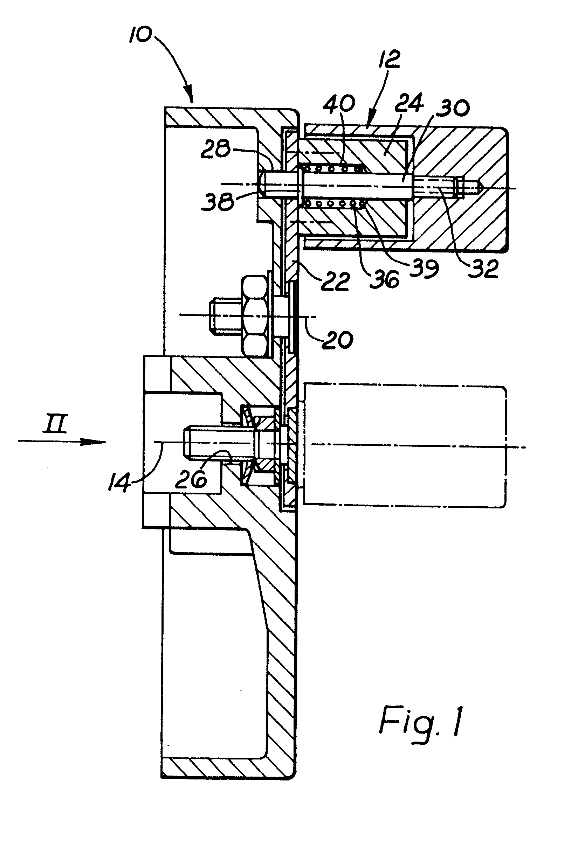

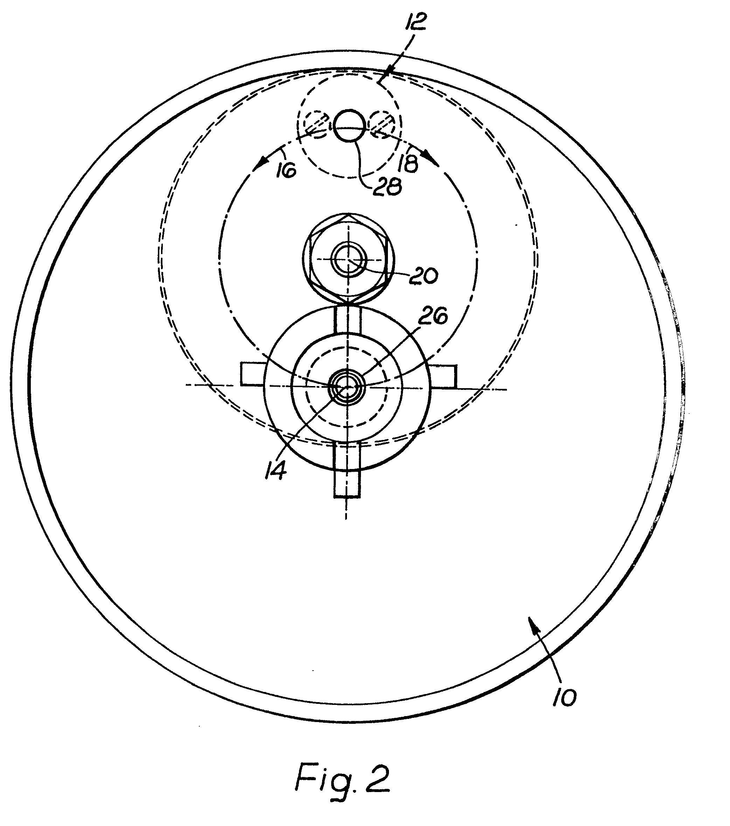

Figures 1 and 2 show a rotary handwheel 10 for driving specimen clamping means (not shown) of a microtome in an oscillating linear movement relative to a cutting knife (not shown).

The handwheel 10 has a crank handle 12 extending therefrom.

A drive motor (not shown) is connectible to the handwheel 10 in order to provide a motor driven movement of the specimen clamping means.

The crank handle 12 is arranged on positioning means in the form of a guide device 22 which is rotatable about an axis 20. The guide device 22 is shown as a disc, but it may have any suitable configuration.

The axis 20 is spaced relative to the rotational axis 14 of the handwheel 10 and is substantially parallel thereto; this enables the crank handle 12 to be positioned in alignment with the rotational axis 14 of the handwheel 10 in one position of the guide device 22.

The guide device 22 is provided with locking means in the form of a bearing sleeve 24 spaced radially relative to the axis 20 and axially parallel to the axis 20. The crank handle 12 is arranged on the bearing sleeve 24 and is slidable relative thereto; this enables the handle 12 to be selectively locked to, or unlocked from, the handwheel 10.

The handwheel 10 is provided with a recess 26 which is disposed in alignment with the rotational axis 14 of the handwheel 10. The handwheel 10 is provided with a further recess 28 which is disposed diametrically opposite to the rotational axis 14 relative to the axis 20. If desired further recesses (not shown) can be provided in the handwheel 10.

The crank handle 12 is provided with detent means in the form of a central pin 30 which is mounted axially slidably in the bearing sleeve 24. The central pin 30 is screwed to a screw-threaded lug 32 in the crank handle 12.

The central pin 30 extends through an aperture provided in the guide device 22. When the crank handle is aligned with a selected one of the recesses 26 or 28, the central pin 30 can extend into the selected recesses 26 or 28 in the handwheel 10, thereby locking the crank handle 12 to the handwheel 10, and securing the crank handle 12 against torque.

A spring element 36 is arranged between the central pin 30 and the bearing sleeve 24 to bias the crank handle 12 towards the handwheel 10 at all times; this biasses the central pin 30 towards the handwheel 10. This arrangement ensures that the central pin 30 extends into the selected recess 26 or 28 when the crank handle 12 is in alignment therewith.

The spring element 36 comprises a helical compression spring which is arranged between a flange 38 on the central pin 30 and an abutment surface 39 at the end of a blind bore recess 40 in the bearing sleeve 24.

When the crank handle 12 is locked in the position spaced from the rotational axis 14, then the handwheel 10 can be rotated by manual operation of the crank handle 12. This causes the specimen clamping means to move relative to the cutting knife at speed related to the speed at which the crank handle 12 is moved.

When it is desired to rotate the handwheel using the drive motor, then the drive motor can be connected to the handwheel so that operation of the drive motor rotates the handwheel and the specimen clamping means. However, before the drive motor is operated, the crank handle 12 may be moved from the radially spaced position to the position aligned with the rotational axis 14. This is achieved by applying a force to the crank handle 12 in a direction away from the handwheel 10 to move the pin 30 out of the recess 28 spaced from the rotational axis 14. During the application of this force the flange 38 compresses the spring element 36.

The handle 12 together with the guide device 22 may be rotated through $180^{\circ}$ about the axis 20 until the crank handle 12 is aligned with the rotational axis 14. When in this position, the spring element automatically biasses the pin 30 into the recess 26 on the rotational axis 14.

Once the crank handle 12 is disposed in alignment with the rotational axis 14, motor driven operation can safely begin. During the motor driven operation the crank handle rotates about the axis 14 but is not displaced relative thereto. When it is again desired to begin manual operation, the crank handle 12 is moved back to the position radially spaced from the rotational axis 14.

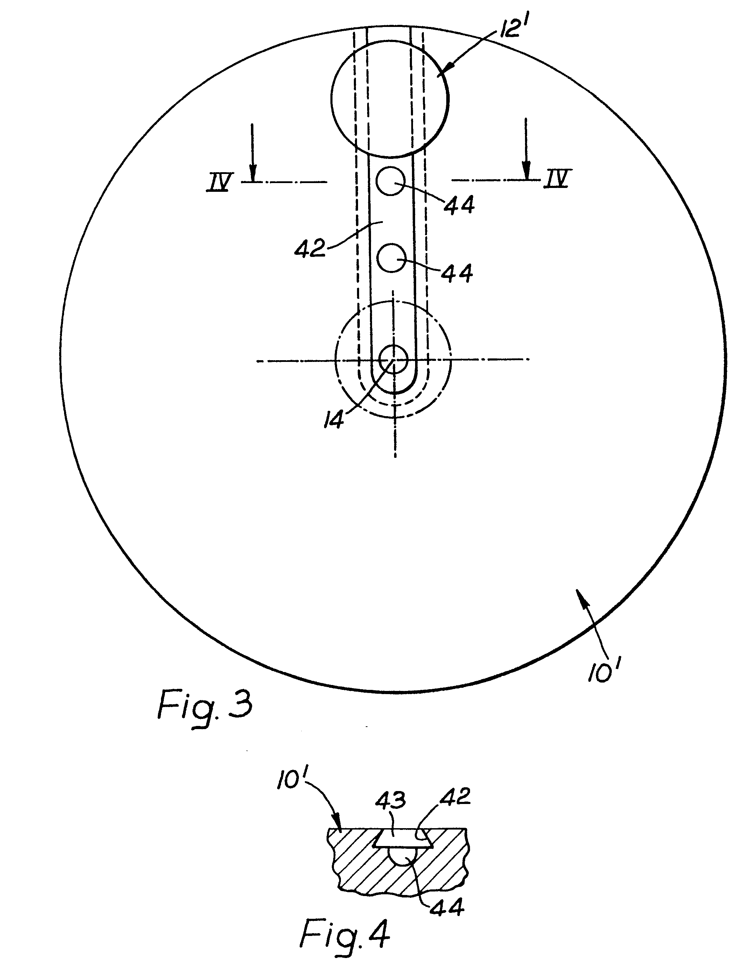

Figure 3 shows another embodiment of a handwheel 10' for a microtome, having a crank handle 12' extending therefrom. As in the previous embodiments, the handwheel 10' can drive specimen clamping means (not shown) in an oscillating linear movement relative to a cutting knife (not shown). A drive motor (not shown) is connectible to the handwheel 10' in order to provide motor driven movement of the specimen clamping means. The crank handle 12' is adjustable between a position radially spaced from the rotational axis 14 of the handwheel 10' and a position aligned with the rotational axis 14. In Figure 3 the radially spaced position is indicated by solid lines and the aligned position by chain-dotted lines.

The crank handle 12' is mounted slidably and lockably in positioning means in the form of a guideway 42 in the handwheel 10'. The guideway 42 extends radially from the centre of the handwheel 10' (i.e. from the rotational axis 14).

As may also be seen from Figure 4, the guideway 42 in the handwheel 10' is constructed as a groove of dovetail configuration. The crank handle 12' is provided with a sliding element 43 which is disposed in, and guided by, the groove 42. The sliding element may be provided with locking means in the form of a pin 30 as shown in Figure 1, for engagement with a selected one of the recesses 44 provided in the groove 42. One of the recesses 44 is disposed in the centre of the handwheel 10' aligned with the rotational axis 14.

If desired the locking means may comprise a ball spring (not shown) mounted in the sliding element, and the recesses 44 may be configured to match the shape of the ball spring.

The operation of the handwheel 10' is similar to the handwheel 10 shown in Figures 1 and 2. When it is desired to move the crank handle 12' into or out of alignment with the rotational axis 14, the crank handle 12' is moved along a linear path instead of the circular path followed in the embodiment shown in Figures 1 and 2.

CLAIMS

1.   An improved rotary handwheel for a motor driven microtome, characterised by a selectively movable crank handle extending from said handwheel, and means to position said crank handle on the rotational axis of said handwheel, whereby said crank is not displaced while the microtome is being motor driven.

2.   A rotary handwheel according to Claim 1 characterised in that the positioning means includes locking means for locking the crank handle at a selected position on the handwheel.

3.   A rotary handwheel according to Claim 1 or 2 characterised in that the positioning means comprises a guide for guiding movement of the crank handle between the rotational axis of the handwheel and a position spaced radially from the rotational axis.

4.   A rotary handwheel according to Claim 3 characterised in that the guide is adapted to guide the movement of the crank handle along a substantially circular path or along a substantially linear path.

5.   A rotary handwheel according to Claim 1, characterised in that the positioning means comprises a guideway which extends radially from the rotational axis, and the handle is mounted slidably to the guideway.

6.   A rotary handwheel according to Claim 5 characterised in that the positioning means including locking means for locking the crank handle at a selected position on the guideway and the guideway is provided with a dovetail configuration and the handle is provided with a sliding element adapted to slide in the guideway.

7.   A rotary handwheel according to Claim 6 characterised in that the locking means comprises detent means provided on the sliding element, and the guideway is provided with at least two recesses, one of which is aligned with the handwheel axis, and the detent means can co-operate with a selected one of the recesses in order to lock the handle relative to the handwheel.

8. A rotary handwheel according to Claim 1 characterised in that the positioning means comprises a guide device which is arranged to be rotatable about an axis substantially parallel to and spaced from the rotational axis of the handwheel, the crank handle being provided on the guide device so that the handle is aligned with the handwheel axis in one position of the guide device.

9. A rotary handwheel according to Claim 8 characterised in that the positioning means includes locking means comprising a bearing sleeve provided on the guide device substantially parallel to and spaced radially relative to the rotational axis of the guide device, and the crank handle is arranged on the bearing sleeve and is axially slidable relative thereto in order to selectively lock and unlock the handle to the handwheel.

10. A rotary handwheel according to Claim 9 characterised in that the locking means further comprises detent means provided on the handle, and the handwheel is provided with at least two recesses, one of said recesses being aligned with the rotational axis of the handwheel, and another of said recesses being disposed diametrically opposite to the rotational axis of the handwheel relative to the rotational axis of the guide device, and the detent means can co-operate with a selected one of the recesses in order to lock the handle relative to the handwheel.

11. A rotary handwheel according to Claim 10 characterised in that the detent means comprises a central pin which is mounted axially slidably in the bearing sleeve, and which can extend through the guide device into the selected one of said recesses, and a spring element is arranged between the central pin and the bearing sleeve.

12. A rotary handwheel according to Claim 11 characterised in that the pin includes a flange extending therefrom, and the spring element is arranged between the flange and the bearing sleeve in order to bias the pin towards the handwheel.

0176216

Fig. 1

Fig. 2

0176216

Fig. 3

Fig. 4